# EUROPEAN PATENT APPLICATION

(11) **EP 4 646 001 A1**
(43) Date of publication of application: **05.11.2025**
(21) Application number: 23914377.9
(22) Date of filing: 03.11.2023
(51) Int. Cl.: H04W 72/566

(54) **METHOD AND APPARATUS FOR DETERMINING DESIGNATED FORWARDER, AND NETWORK DEVICE**

(30) Priority: 03.01.2023 CN 202310001591
(71) Applicant: ZTE CORPORATION, Shenzhen, Guangdong 518057 (CN)
(72) Inventor: LIN, Zhi, Shenzhen, Guangdong 518057 (CN)
(74) Representative: Ziebig Hengelhaupt Intellectual Property Attorneys Patentanwaltskanzlei PartGmbB
(86) International application number: PCT/CN2023/129706
(87) International publication number: WO 2024/146240

(57) **Abstract**

The present application relates to the field of communications, and discloses a method and apparatus for determining a designated forwarder, and a network device. The method for determining a designated forwarder in embodiments of the present application comprises: generating (S101) first priority information, and carrying the first priority information in an Ethernet auto-discovery route; and sending (S102) the Ethernet auto-discovery route to a second border device, so that the second border device determines a designated forwarder according to the first priority information, wherein the second border device and a first border device belong to the same Ethernet segment.

## Description

### CROSS-REFERENCE TO RELATED APPLICATIONS

The present application claims priority to the Chinese patent application No. 202310001591.3 filed on January 3, 2023 to the China Patent Office, and entitled "METHOD AND APPARATUS FOR DETERMINING DESIGNATED FORWARDER, AND NETWORK DEVICE," the entire content of which is incorporated herein by reference.

### TECHNICAL FIELD

The present invention relates to the technical field of communications, in particular to a method and apparatus for determining a designated forwarder, and a network device.

### BACKGROUND

EVPN multi-homing is a technology that supports a connection of a customer edge (CE) to a plurality of provider edges (PEs). In multi-homing networking, when sending broadcast, unknown unicast, and multicast traffics, in order to avoid the problems of traffic loops and multiple traffics, such traffics are forwarded by a designated forwarder (DF) elected from multi-homing PEs.

The preference-based designated forwarder election for protocol standards is very suitable for a situation where each Ethernet segment (ES) has only one Ethernet tag. However, it fails to well support a scenario where one Ethernet segment has a plurality of Ethernet tags. The same provider edge uses the same preference on each Ethernet tag on the same Ethernet segment, so different Ethernet tags on the same Ethernet segment will select the same provider edge as the designated forwarder, which cannot fully utilize each multi-homing provider edge and is not conducive to load sharing.

### SUMMARY

Embodiments of the present application provide a method and apparatus for determining a designated forwarder, and a network device, which can solve the problem that a preference-based designated forwarder election method cannot effectively utilize resources of each multi-homing PE, which is not conducive to load sharing.

In a first aspect, a method for determining a designated forwarder is provided, which is performed by a first provider edge, and includes: generating first preference information, and carrying the first preference information in an Ethernet auto-discovery route, wherein the first preference information is used to instruct a second provider edge to determine the designated forwarder; and sending the Ethernet auto-discovery route to the second provider edge, wherein the second provider edge and the first provider edge are multi-homed to the same Ethernet segment.

In a second aspect, a method for determining a designated forwarder is provided, which is performed by a second provider edge, and includes: receiving a first Ethernet auto-discovery route sent by a first provider edge, wherein the first Ethernet auto-discovery route carries first preference information of the first provider edge; and determining the designated forwarder according to the first preference information, wherein the second provider edge and the first provider edge are multi-homed to the same Ethernet segment.

In a third aspect, an apparatus for determining a designated forwarder is provided, including: a generating module, configured to generate first preference information, and carry the first preference information in an Ethernet auto-discovery route, wherein the first preference information is used to instruct a second provider edge to determine the designated forwarder; and a sending module, configured to send the Ethernet auto-discovery route to the second provider edge, wherein the second provider edge and the first provider edge are multi-homed to the same Ethernet segment.

In a fourth aspect, an apparatus for determining a designated forwarder is provided, including: a receiving module, configured to receive a first Ethernet auto-discovery route sent by a first provider edge, wherein the first Ethernet auto-discovery route carries first preference information of the first provider edge; and a determining module, configured to determine the designated forwarder according to the first preference information, wherein the second provider edge and the first provider edge are multi-homed to the same Ethernet segment.

In a fifth aspect, a network device is provided, the device includes a processor and a memory, the memory stores a program or instruction able to run on the processor, and the program or the instruction, when executed by the processor, implements the steps of the method as described in the first aspect or the second aspect.

In a sixth aspect, a readable storage medium is provided, the readable storage medium has a program or instruction stored thereon, and the program or the instruction, when executed by a processor, implements the steps of the method as described in the first aspect or the second aspect.

In a seventh aspect, a chip is provided, the chip includes a processor and a communication interface, the communication interface is coupled with the processor, and the processor is configured to run a program or an instruction to implement the method as described in the first aspect or the second aspect.

In an eighth aspect, a computer program/program product is provided, the computer program/program product is stored in a storage medium, and the computer program/program product is executed by at least one processor to implement the steps of the method for determining the designated forwarder as described in the first aspect or the second aspect.

### BRIEF DESCRIPTION OF DRAWING(S)

FIG. 1 shows a first schematic flowchart of a method for determining a designated forwarder provided by an embodiment of the present application.
FIG. 2 shows a schematic structural diagram of multi-homing accessing of a customer edge to a provider edge through an Ethernet segment provided by an embodiment of the present application.
FIG. 3 and FIG. 4 show schematic diagrams of encapsulation formats of a preference extended community attribute of an Ethernet tag provided by an embodiment of the present application.
FIG. 5 shows a second schematic flowchart of a method for determining a designated forwarder provided by an embodiment of the present application.
FIG. 6A shows a third schematic flowchart of a method for determining a designated forwarder provided by an embodiment of the present application.
FIG. 6B shows a fourth schematic flowchart of a method for determining a designated forwarder provided by an embodiment of the present application.
FIG. 7 shows a first schematic structural diagram of an apparatus for determining a designated forwarder provided by an embodiment of the present application.
FIG. 8 shows a second schematic structural diagram of an apparatus for determining a designated forwarder provided by an embodiment of the present application.
FIG. 9 shows a schematic structural diagram of a network device provided by an embodiment of the present application.

### DETAILED DESCRIPTION

The technical solutions in the embodiments of the present application will be clearly described in the following with reference to the accompanying drawings in the embodiments of the present application. Apparently, the described embodiments are some rather than all of the embodiments of the present application. All other embodiments obtained by persons skilled in the art based on the embodiments in the present application fall within the scope of protection of the present application.

The terms "first," "second," and the like in the specification and claims of the present application are used for distinguishing similar objects, but are not used for describing a specific sequence or precedence order. It should be understood that terms used in this way are exchangeable in a proper case, so that the embodiments of the present application may be implemented in an order different from the order shown or described herein. Moreover, the objects distinguished by "first" and "second" are usually of the same class and do not limit the number of objects. For example, a first object may be one or more. In addition, "and/or" in the specification and the claims represents at least one of the connected objects. A character "/" generally represents that the association objects in front of and behind "/" are in an "or" relationship.

An election method of a designated forwarder for relevant protocol standards includes a default DF election method based on a modular operation, a highest random weighted election method based on a hash algorithm, a preference-based highest-preference election method and lowest-preference election method, etc. The preference-based election method can provide more certainty and user controllable operations compared to the other two methods. The preference-based DF election for the protocol standards is very suitable for a situation where each Ethernet segment (ES) has only one Ethernet tag. However, it fails to well support a scenario where one Ethernet segment has a plurality of Ethernet tags. The same provider edge uses the same preference on each Ethernet tag on the same Ethernet segment, so different Ethernet tags on the same Ethernet segment will select the same provider edge as the designated forwarder. To solve this problem, the protocol standards provide a method of configuring a local policy on each multi-homing PE, locally specifying a certain range of Ethernet tags to use the highest-preference DF election method to elect the PE with the highest preference from among the plurality of PEs as the DF, and specifying remaining Ethernet tags to use the lowest-preference DF election method to elect the PE with the lowest preference from among the plurality of PEs as the DF, thus dispersing the DFs selected by the plurality of Ethernet tags on two PEs. However, using this method, even if a CE is multi-homed to three or more PEs, only two PEs are elected as the DFs, which cannot effectively utilize resources on each multi-homed PE, and is not conducive to load sharing. Moreover, the local policy is not transparent enough, and if configuration errors occur, the DF election fails, and localization is difficult.

A method for determining a designated forwarder provided by an embodiment of the present application is illustrated below in detail through some embodiments and their application scenarios with reference to the accompanying drawings.

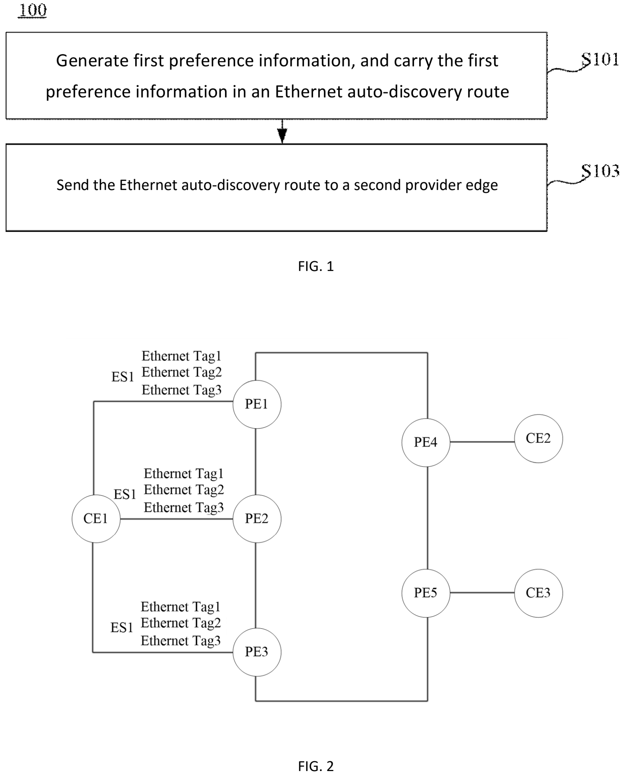

As shown in FIG. 1, an embodiment of the present invention provides a method 100 for determining an execution forwarder. The method may be executed by a first provider edge. In other words, the method may be executed by software or hardware installed on the first provider edge. The method includes the following steps:

step S101, first preference information is generated, and the first preference information is carried in an Ethernet auto-discovery route. The first preference information is used to instruct a second provider edge to determine a designated forwarder.

A customer edge accesses the first provider edge and the second provider edge in a multi-homing manner, one Ethernet auto-discovery route corresponds to one target Ethernet tag on a target Ethernet segment, and the Ethernet auto-discovery route carries the first preference information of the target Ethernet tag. The first preference information is used to enable the second provider edge to determine the designated forwarder according to the first preference information when the customer edge accesses a plurality of provider edges in a multi-homing manner. At the same time of, before or after sending the Ethernet auto-discovery route to the second provider edge, an Ethernet segment route may be sent to the second provider edge, and the Ethernet segment route carries a first initial preference of the target Ethernet segment of the first provider edge.

Specifically, the Ethernet auto-discovery route is an Ethernet Auto-Discovery per EVI (EVPN instance) route generated by the customer edge multi-homed first provider edge and is able to be used to participate in election of the designated forwarder. The target Ethernet segment is a set of Ethernet links for the same customer edge to be multi-homed to the first provider edge and the second provider edge. The target Ethernet tag is used to identify a specific broadcast domain on the Ethernet segment. The Ethernet Auto-Discovery per EVI route is notified and learned between relevant provider edges of a specified EVPN instance. If the Ethernet segment has a plurality of Ethernet tags, a corresponding Ethernet auto-discovery route is generated for each Ethernet tag. The multi-homed first provider edge carries newly-added first preference information on the Ethernet auto-discovery route generated for each Ethernet tag. After receiving the Ethernet auto-discovery route, other multi-homed second provider edges modify a first initial preference carried in the Ethernet segment route of the first provider edge according to an indication of the first preference information, and then participate in the election of the designated forwarder according to the modified preference. The Ethernet segment route can only be notified and learned between the provider edges multi-homed on the same Ethernet segment.

For example, as shown in FIG. 2, a customer edge CE1 is multi-homed to a provider edge PE1, a provider edge PE2, and a provider edge PE3 through an Ethernet segment ES1. The Ethernet segment ES1 has a plurality of Ethernet tags, namely an Ethernet Tag1, an Ethernet Tag2, and an Ethernet Tag3. Each Ethernet tag corresponds to one broadcast domain (BD), and each multi-homed provider edge generates one Ethernet segment route and three Ethernet Auto-Discovery per EVI routes. The Ethernet Tag1 of the Ethernet segment ES1 and the provider edge PE4 form a unique broadcast domain of an Ethernet virtual private network (EVPN) instance 1. The Ethernet Tag2 and the Ethernet Tag3 of the Ethernet segment ES1 form the two broadcast domains of an EVPN instance 2 along with the provider edge PE5. The Ethernet segment routes generated by the provider edge PE1, the provider edge PE2, and the provider edge PE3 are notified and learned among the provider edge PE1, the provider edge PE2, and the provider edge PE3. The Ethernet Auto-Discovery per EVI route generated by the provider edge PE1, the provider edge PE2, and the provider edge PE3 for <Ethernet segment ES1, Ethernet Tag1> is notified and learned among the provider edge PE1, the provider edge PE2, the provider edge PE3 and the provider edge PE4. The two Ethernet Auto-Discovery per EVI routes generated by the provider edge PE1, the provider edge PE2, and the provider edge PE3 for <Ethernet segment ES1, Ethernet Tag2> and <Ethernet segment ES1, Ethernet Tag3> are notified and learned among the provider edge PE1, the provider edge PE2, the provider edge PE3, and the provider edge PE5. The customer edge CE2 accesses the PE4 in a uni-homing manner, and the customer edge CE3 accesses the PE5 in a uni-homing manner.

In a possible implementation, carrying the first preference information in the Ethernet auto-discovery route includes: carrying the first preference information in an extended community attribute of the Ethernet auto-discovery route.

Generating the first preference information may include: generating the first preference information according to pre-configured preference configuration information, wherein the preference configuration information includes absolute preference configuration information and relative preference configuration information, and the first preference information includes a preference type field and a preference value field corresponding to the preference type field.

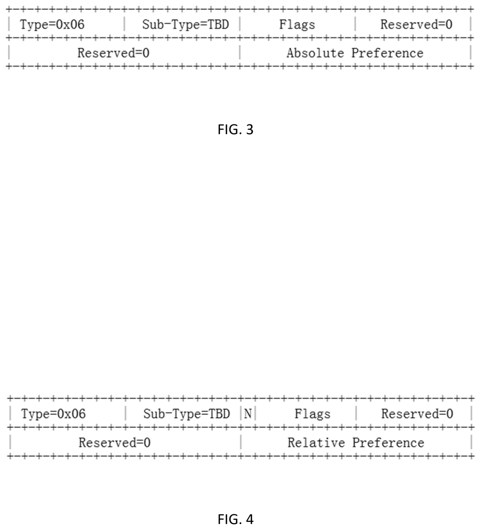

A preference may be configured according to performance, a bandwidth, online time and other information of the provider edge. A format of the first preference information generated through the preference configuration information may be formats exemplified in FIG.3 and FIG. 4, and the format includes but is not limited to a Type field, a Sub-Type field, a Flags field, a Reserved field, and an Absolute Preference or Relative Preference field of the preference value field.

The following implementations may be used to generate the first preference information according to the preference configuration information.
(1) In a case where the preference configuration information is the absolute preference configuration information, the preference type field is an absolute preference identifier, and the preference value field is an absolute preference value, wherein the absolute preference value is taken as a first target preference corresponding to the first provider edge. The format of the first preference information may be the Type field, the Sub-Type field, the Flags field, the Reserved field, and the Absolute Preference field of the absolute preference value field as exemplified in FIG. 3, wherein the Flags field is undefined, and should be set to be 0 when sent and be ignored when received by the first provider edge, and the absolute preference value of the Absolute Preference field is a value ranging from 0 to 65535. When configuring the absolute preference configuration information, any value ranging from 0 to 65535 may be configured as the absolute preference value to generate the first preference information as exemplified in FIG. 3. The Type field is 0x06, which corresponds to an extended community attribute of an EVPN route. The specific value of the Sub-Type field is to be defined, indicating that the extended community attribute is the absolute preference identifier of the Ethernet tag. The Reserved field may be 0, and the Absolute Preference field is the configured absolute preference value. When the Ethernet Auto-Discovery per EVI route carries the first preference information mentioned above, it indicates that the first provider edge only uses the absolute preference value in the absolute preference value field (Absolute Preference) in this first preference information to participate in the election of the designated forwarder. The first target preference is the absolute preference value in the absolute preference value field (Absolute Preference).
(2) In a case where the preference configuration information is the relative preference configuration information, the preference type field is a relative preference identifier, the preference value field includes a relative preference value and a symbol identifier, and the symbol identifier is used to indicate whether the relative preference value is positive or negative, wherein a sum of a first initial preference and a value corresponding to a relative preference value field is taken as a first target preference corresponding to the first provider edge, wherein the first initial preference is carried in an Ethernet segment route sent by the first provider edge to the second provider edge. The format of the first preference information may be the Type field, the Sub-Type field, the Flags field, an N flag bit (symbol identifier) defined in the Flags field, the Reserved field, and the Relative Preference field representing the relative preference value field as exemplified in FIG. 4. When the N flag bit is set to be 1, it indicates that the relative preference is a negative number, and when the N flag is 0, it indicates that the relative preference is a positive number. The Relative Preference field ranges from 0 to 65535. Combined with the N flag, the relative preference value may represent the range from -65535 to 65535. When configuring the relative preference configuration information, any value ranging from -65535 to 65535 may be configured as the relative preference value to generate the first preference information as exemplified in FIG. 4. The Type field is 0x06, which corresponds to an extended community attribute of an EVPN route. The specific value of the Sub-Type field is to be defined, indicating that the extended community attribute is the relative preference identifier of the Ethernet tag. The Reserved field may be 0, and the Relative Preference field is an absolute value of the configured relative preference. When the configured relative preference is a negative number, the N flag bit is set to be 1, and when the configured relative preference is a positive number, the N flag bit is 0. When the Ethernet Auto-Discovery per EVI route carries the first preference information mentioned above, it indicates that the first provider edge uses the relative preference value field in this first preference information to modify the first initial preference, and then uses the modified preference to participate in the election of the designated forwarder. The first initial preference is a value within a certain value range. For example, the value ranges from 0 to 65535, and the first initial preference may be set to be any value between 0 and 65535. It is worth noting that the relative preference value and the symbol identifier may be set in one field. That is to say, no separate symbol field is provided, and by using different encoding manners for the relative preference value field, the positive and negative values are directly reflected. In the subsequent explanation, only the manner of setting the separate symbol field as exemplified in FIG. 4 is used as an example for detailed explanation.

Using the relative preference value field to modify the first initial preference may be as follows: if the flag bit N is set to be 1 (first flag), the relative preference value in the Relative Preference field is subtracted from the first initial preference in the Ethernet segment route; if the subtraction result is greater than or equal to 0 and less than or equal to a preference threshold, the modified preference uses the value obtained after subtraction; and if the subtraction result is less than 0, the modified preference is 0. If the flag bit N is set to be 0 (second flag), the first initial preference in the Ethernet segment route is added to the relative preference value in the Relative Preference field; if the addition result is greater than or equal to 0 and less than or equal to the preference threshold, the modified preference uses the value obtained after addition; and if the addition result is greater than the preference threshold, the modified preference is the preference threshold. For example, the preference threshold may be 65535.

Step S103, the Ethernet auto-discovery route is sent to the second provider edge.

The second provider edge and the first provider edge are multi-homed to the same Ethernet segment.

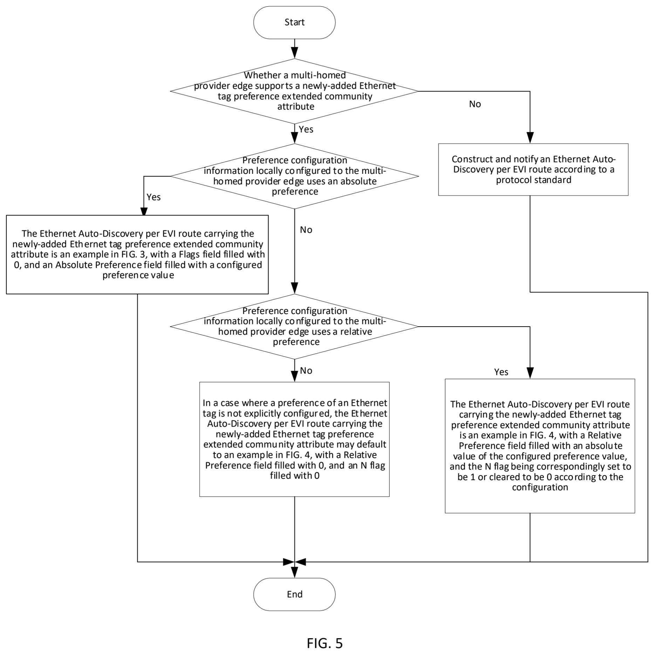

In the following, a processing flow of sending Ethernet Auto-Discovery per EVI route by the multi-homed provider edges in the embodiment of the present application is illustrated in detail with reference to FIG. 5. As shown in FIG. 5, whether the multi-homed provider edges support the newly-added Ethernet tag preference extended community attribute is judged first. If the multi-homed provider edges do not support the newly-added Ethernet tag preference extended community attribute (extended first preference information) in the embodiment of the present application, the Ethernet Auto-Discovery per EVI route is constructed and notified according to the protocol standard. If it is possible to support the newly-added Ethernet tag preference extended community attribute in the embodiment of the present application, whether the preference configuration information locally configured for the multi-homed provider edges uses an absolute preference or a relative preference is judged. If the local configuration of the multi-homed provider edges uses the <ESI, Ethernet Tag> absolute preference, the configuration range of the absolute preference values is between 0 and 65535. The Ethernet Auto-Discovery per EVI route carrying the newly-added Ethernet tag preference extended community attribute is an example in FIG. 3, the Flags field is filled with 0, and the Absolute Preference field is filled with the configured preference value. If the local configuration uses the <ESI, Ethernet Tag> relative preference, the configuration range of the relative preference values is between -65535 and 65535. The Ethernet Auto-Discovery per EVI route carrying the newly-added Ethernet tag preference extended community attribute is an example in FIG. 4. If the configured relative preference is a negative number, the N flag of Flags is set to be 1. If the configured relative preference is a positive number, the N flag of Flags is cleared to be 0, and the Relative Preference field is filled with the absolute value of the configured preference value. It is worth noting that if the local configuration <ESI, Ethernet Tag> supports the newly-added Ethernet tag preference extended community attribute but does not clearly configures the value of the preference, then the Ethernet Auto Discovery per EVI route carrying the newly-added Ethernet tag preference extended community attribute may use the example in FIG. 4, the N flag of Flags is cleared to be 0, and the Relative Preference field is filled with 0, thereby demonstrating its capability to support the newly-added Ethernet tag preference extended community attribute to other multi-homed provider edges.

Through the technical solution disclosed in the embodiment of the present application, when the second provider edge elects the designated forwarder according to the first preference information, different provider edges may be elected as the designated forwarder on different Ethernet tags of the same Ethernet segment, which can effectively utilize the resources of the multi-homed provider edges, facilitating load sharing. Further, the election method for the designated forwarder and the preference of the Ethernet tags on the Ethernet segment are publicly notified among the provider edges, making the election more transparent and facilitating problem localization.

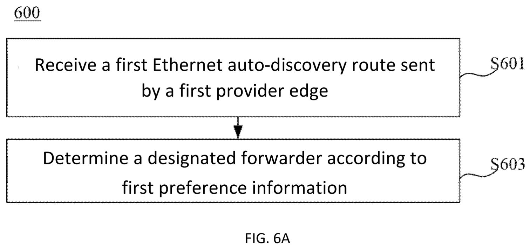

As shown in FIG. 6A, an embodiment of the present invention provides a method 600 for determining a designated forwarder. The method may be executed by a second provider edge. In other words, the method may be executed by software or hardware installed on the second provider edge. The method includes the following steps:
step S601, a first Ethernet auto-discovery route sent by a first provider edge is received.

The first Ethernet auto-discovery route carries first preference information of the first provider edge.

One first Ethernet auto-discovery route corresponds to one target Ethernet tag on a target Ethernet segment, a first Ethernet segment route corresponds to the target Ethernet segment, the first Ethernet auto-discovery route carries first preference information of the target Ethernet tag of the target Ethernet segment of the first provider edge, and the first Ethernet segment route carries a first initial preference of the target Ethernet segment of the first provider edge.

Step S603, the designated forwarder is determined according to the first preference information. The second provider edge and the first provider edge are multi-homed to the same Ethernet segment.

Determining the designated forwarder according to the first preference information includes: determining the designated forwarder according to a first target preference and a second target preference.

One second Ethernet auto-discovery route corresponds to one target Ethernet tag on the target Ethernet segment, and a second Ethernet segment route corresponds to the target Ethernet segment.

In a possible implementation, the method further includes: receiving the first Ethernet segment route sent by the first provider edge, wherein the first Ethernet segment route carries the first initial preference of the first provider edge; determining the first target preference of the first provider edge according to the first preference information and the first initial preference, wherein the first preference information includes a preference type field and a preference value field corresponding to the preference type field; and determining the second target preference of the second provider edge according to second preference information of the second provider edge carried in the second Ethernet auto-discovery route and a second initial preference of the second provider edge carried in the second Ethernet segment route, wherein the second preference information includes a preference type field and a preference value field corresponding to the preference type field. Determining the designated forwarder according to the first preference information includes: determining the designated forwarder according to the first target preference and the second target preference.

Specifically, the first Ethernet auto-discovery route is an Ethernet Auto-Discovery per EVI route generated by the customer edge multi-homed first provider edge and able to be used to participate in election of the designated forwarder. The target Ethernet segment is a set of Ethernet links for the same customer edge to be multi-homed to the first provider edge and the second provider edge. The target Ethernet tag is used to identify a specific broadcast domain on the Ethernet segment. The Ethernet Auto-Discovery per EVI route can only be notified and learned between the relevant provider edges of the same EVPN instance. If the Ethernet segment has a plurality of Ethernet tags, a corresponding Ethernet auto-discovery route is generated for each Ethernet tag. The multi-homed first provider edge carries newly-added first preference information on the first Ethernet auto-discovery route generated for each Ethernet tag. After receiving the first Ethernet auto-discovery route, other multi-homed second provider edges modify the first initial preference carried in the first Ethernet segment route of the first provider edge according to an indication of the first preference information, and then participate in the election of the designated forwarder according to the modified preference.

Specifically, as recorded in the above embodiment, the first preference information carries the preference type field and the preference value field. When determining the first target preference, the preference type field of the first preference information may be determined first. In a case where the preference type field is an absolute preference identifier, the preference value field is an absolute preference value, and the absolute preference value is taken as the first target preference corresponding to the first provider edge.

In a case where the preference type field is a relative preference identifier, the preference value field includes a relative preference value and a symbol identifier, and the symbol identifier is used to indicate whether the relative preference value is positive or negative, wherein a sum of the first initial preference and the relative preference value corresponding to a relative preference value field is taken as the first target preference corresponding to the first provider edge.

Taking the sum of the first initial preference and the relative preference value corresponding to the relative preference value field as the first target preference corresponding to the first provider edge includes: obtaining the first target preference by calculating a difference between the first initial preference and the relative preference value in a case where a flag bit of the symbol identifier corresponding to the relative preference identifier is a first flag; and obtaining the first target preference by adding the first initial preference to the relative preference value in a case where the flag bit of the symbol identifier corresponding to the relative preference identifier is a second flag.

Further, the first initial preference is represented by any value within a range of a first value and a second value, the any value is associated with the first initial preference, and obtaining the first target preference by calculating the difference between the first initial preference and the relative preference value includes: determining the first target preference as the first value in a case where the difference between the first initial preference and the relative preference value is lower than the first value.

Specifically, the first value may be set to be 0. If the flag bit N is set to be 1 (the first flag), the relative preference value in the Relative Preference field is subtracted from the first initial preference in the Ethernet segment route. If a subtraction result is greater than or equal to the first value, the first target preference is a value obtained after subtraction. If the subtraction result is less than the first value, the first target preference is the first value. For example, the first value may be 0.

Further, the first initial preference is represented by any value within a range of a first value and a second value, the any value is associated with the first initial preference, and obtaining the first target preference by adding the first initial preference to the relative preference value includes: determining the first target preference as the second value in a case where a sum of the first initial preference and the relative preference value is higher than the second value.

Specifically, the second value may be set to be 65535. If the flag bit N is set to be 0 (the second flag), the first initial preference in the Ethernet segment route is added to the relative preference value in the Relative Preference field. If an addition result is less than or equal to the second value, the first target preference is a value obtained after addition. If the addition result is greater than the second value, the first target preference is the second value. For example, the second value may be 65535.

Further, when determining the second target preference, the preference type field of the second preference information may be determined first; and in a case where the preference type field is the absolute preference identifier, the preference value field is the absolute preference value, and the absolute preference value is taken as the second target preference corresponding to the second provider edge. In a case where the preference type field is the relative preference identifier, the preference value field includes the relative preference value and the symbol identifier, and the symbol identifier is used to indicate whether the relative preference value is positive or negative, wherein the sum of the second initial preference and the relative preference value corresponding to the relative preference value field is taken as the second target preference corresponding to the second provider edge.

Taking the sum of the second initial preference and the relative preference value corresponding to the relative preference value field as the second target preference corresponding to the second provider edge includes: obtaining the second target preference by calculating a difference between the second initial preference and the relative preference value in a case where the flag bit of the symbol identifier corresponding to the relative preference identifier is the first flag; and obtaining the second target preference by adding the second initial preference to the relative preference value in a case where the flag bit of the symbol identifier corresponding to the relative preference identifier is the second flag.

The second initial preference is represented by any value within the range of the first value and the second value, the any value is associated with the second initial preference, and obtaining the second target preference by calculating the difference between the second initial preference and the relative preference value includes: determining the second target preference as the first value in a case where the difference between the second initial preference and the relative preference value is lower than the first value.

The second initial preference is represented by any value within the range of the first value and the second value, the any value is associated with the second initial preference, and obtaining the second target preference by adding the second initial preference to the relative preference value includes: determining the second target preference as the second value in a case where a sum of the second initial preference and the relative preference value is higher than the second value.

It is worth noting that the second preference information and the second initial preference have the same or similar implementations as the first preference information and the first initial preference mentioned above, and the similarities can be referred to each other, which are not repeated here in the embodiment of the present application.

Further, after obtaining the first target preference and the second target preference, the first target preference is compared with the second target preference, and the designated forwarder is determined from the first provider edge and the second provider edge according to a comparison result. More specifically, the designated forwarder may be determined based on highest-preference or lowest-preference. The highest-preference may be used to compare the values of the first target preference and the second target preference, and a provider edge corresponding to the preference with the greatest value among the values of the first target preference and the second target preference is selected as the designated forwarder. Alternatively, the lowest-preference may be used to compare the values of the first target preference and the second target preference, and a provider edge corresponding to the preference with the smallest value among the values of the first target preference and the second target preference is selected as the designated forwarder.

Through the technical solution provided by the embodiment of the present application, when the second provider edge elects the designated forwarder according to the first preference information, different provider edges may be elected as the designated forwarder on different Ethernet tags of the same Ethernet segment, which can effectively utilize the resources on the multi-homed provider edges, facilitating load sharing. Further, the election method for the designated forwarder and the preference of the Ethernet tags on the Ethernet segment are publicly notified among the provider edges, making the election more transparent and facilitating problem localization.

Here is an example to further clarify and illustrate an election process of the designated forwarder provided by the embodiments of the present application. Taking the Ethernet segment ES1 accessing the provider edge PE1, the provider edge PE2, and the provider edge PE3 in a multi-homing manner exemplified in FIG. 2 as an example, the provider edge PE1, the provider edge PE2, and the provider edge PE3 all enable preference-based DF election and configure initial preferences as 32758, 32768, and 32778, respectively. If any of the provider edge PE1, the provider edge PE2, and the provider edge PE3 does not support the capability of the Ethernet Auto-Discovery per EVI route in the present application to carry the first preference information (Ethernet tag preference extended community attribute), then according to the initial-preference-based designated forwarder election of the protocol standard, the provider edge PE1, the provider edge PE2, and the provider edge PE3 carry the initial preferences 32758, 32768, and 32778 in their respective notified Ethernet segment routes respectively. If a highest-preference election algorithm is used, three broadcast domains, the Ethernet Tag1, the Ethernet Tag2, and the Ethernet Tag3, corresponding to the three Ethernet tags in the Ethernet segment ES1 all select the provider edge PE3 as the designated forwarder. If a lowest-preference election algorithm is used, three broadcast domains, the Ethernet Tag1, the Ethernet Tag2, and the Ethernet Tag3, corresponding to the three Ethernet tags in the Ethernet segment ES1 all select the provider edge PE1 as the designated forwarder.

If the provider edge PE1, the provider edge PE2, and the provider edge PE3 all support the capability to carry the first preference information provided by the embodiments of the present application, the multi-homed provider edge PE1, provider edge PE2, and provider edge PE3 are configured with the relative preferences of -100, 0, and -200 on the Ethernet Tag1, respectively. The three multi-homed provider edges each carry the first preference information identified by the relative preferences in the Ethernet Auto-Discovery per EVI route of the Ethernet Tag1 on the Ethernet segment ES1, wherein the relative preferences are -100, 0, and -200, respectively. In combination with the initial preferences 32758, 32768, and 32778 respectively notified to the multi-homed provider edge PE1, provider edge PE2, and provider edge PE3 in the Ethernet route, according to a calculation rule for the target preference in the embodiments of the present application, target preferences of the provider edge PE1, the provider edge PE2, and the provider edge PE3 on the Ethernet Tag1 of the Ethernet segment ES1 are 32658, 32768, and 32578, respectively. After obtaining the target preference of each provider edge on the Ethernet Tag1 of the Ethernet segment ES1, the target preferences of the provider edges are compared, and the designated forwarder is elected by using the highest-preference algorithm or the lowest-preference algorithm. If the highest-preference algorithm is used, the Ethernet Tag1 selects the provider edge PE2 corresponding to the highest preference 32768 as the designated forwarder. If the lowest-preference algorithm is used, the Ethernet Tag1 selects the provider edge PE3 corresponding to the lowest preference 32578 as the designated forwarder. Similarly, absolute preferences and/or relative preferences may further be configured on the Ethernet Tag2 and the Ethernet Tag3 of the provider edge PE1, the provider edge PE2, and the provider edge PE3 to modify the initial preferences, and designated forwarders are selected on the Ethernet Tag2 and Ethernet Tag3 respectively according to the modified preferences.

It is worth noting that in the embodiments of the present application, the preference types and/or values configured for the same provider edge in different Ethernet tags of the same Ethernet segment may be different. For the same provider edge PE1, its preference on the Ethernet Tag1 of the Ethernet segment ES1 is configured as an absolute preference, with the value of the absolute preference of 35575, and its preference on the Ethernet Tag2 of the same Ethernet segment ES1 is configured as an absolute preference, with the value of the absolute preference of 32375. Alternatively, its preference on the Ethernet Tag1 of the same Ethernet segment ES1 is configured as a relative preference, with the relative preference of -100, and its preference on the Ethernet Tag2 of the same Ethernet segment ES1 is configured as an absolute preference, with the value of the absolute preference of 32375. In this way, one provider edge on different Ethernet tags of the same Ethernet segment may have different preferences than the initial preference of the Ethernet segment. Different Ethernet tags of the same Ethernet segment may elect different provider edges as the designated forwarder, which facilitates resource utilization and load sharing. Further, for different provider edges, the preference type and/or value of the different provider edges on the same Ethernet tag of the same Ethernet segment ES1 may be different. For the provider edge PE1 and the provider edge PE2, a preference of the provider edge PE1 on the Ethernet Tag1 of the Ethernet segment ES1 is configured as an absolute preference, with the value of the absolute preference of 35575, and a preference of the provider edge PE2 on the same Ethernet Tag1 of the same Ethernet segment ES1 is configured as a relative preference, with the relative preference of -200.

Further, if any of the Ethernet auto-discovery routes generated by the multi-homed provider edges does not carry the first preference information, it indicates that the provider edges do not have the capability to process the first preference information. In order to avoid the problem of a failure in the designated forwarder election due to inconsistent understanding of the received preference information of each provider edge, the multi-homed provider edges will fall back to use a preference-based designated forwarder election algorithm of the protocol standard. Using the preference-based designated forwarder election algorithm of the protocol standard may be electing the provider edge with the highest preference or the provider edge with the lowest preference among the first initial preferences of the Ethernet segment routes notified by the respective provider edges as the designated forwarder.

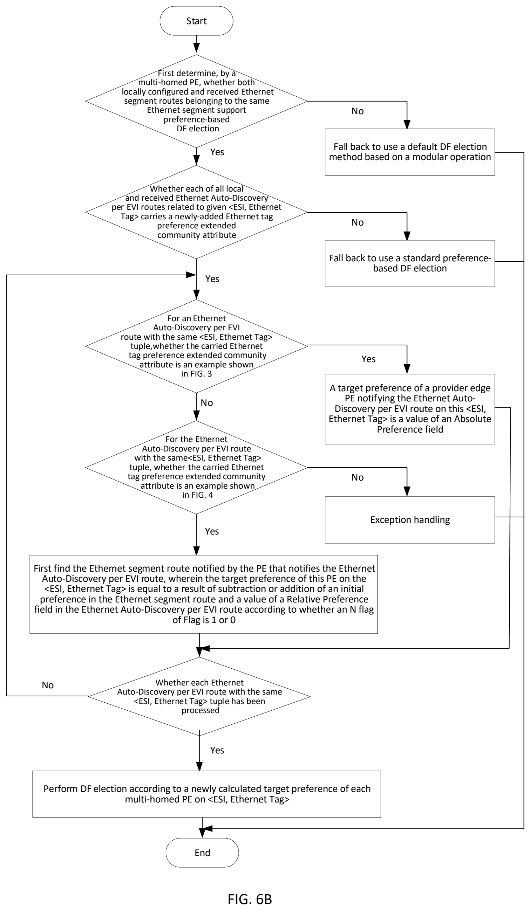

In the following, a processing process of a multi-homed provider edge receiving an Ethernet segment route and an Ethernet Auto-Discovery per EVI route sent by other provider edges multi-homed by the same Ethernet segment is illustrated with reference to FIG. 6B.

As shown in FIG. 6B, the multi-homed PE first determines whether both the locally configured and received Ethernet segment routes belonging to the same Ethernet segment support preference-based DF election. If not, it falls back to use a default DF election method based on a modular operation. After determining to use the preference-based DF election method, whether all local and received Ethernet Auto-Discovery per EVI routes related to given <ESI, Ethernet Tag> carry the newly-added Ethernet tag preference extended community attribute is checked. If there is one Ethernet Auto-Discovery per EVI route that does not carry the newly-added Ethernet tag preference extended community attribute, it indicates that there is at least one multi-homed provider edge PE that does not support the content of the present invention. The multi-homed provider edge PE falls back to use standard preference-based DF election, such as the preference-based highest-preference election method and lowest-preference election method. After determining that all the multi-homed provider edges PEs can support the content of the present invention, whether the Ethernet tag preference extended community attribute carried by each Ethernet Auto-Discovery per EVI route with the same <ESI, Ethernet Tag> is the example shown in FIG. 3 is determined one by one. If the Ethernet tag preference extended community attribute carried in the Ethernet Auto-Discovery per EVI route is the example shown in FIG. 3, then the provider edge PE of the Ethernet Auto-Discovery per EVI is notified that the target preference on this <ESI, Ethernet Tag> is a value of the Absolute Preference field exemplified in FIG. 3. Whether the Ethernet tag preference extended community attribute carried in each Ethernet Auto-Discovery per EVI route with the same <ESI, Ethernet Tag> tuple is the example shown in FIG. 4 is determined one by one. If the Ethernet tag preference extended community attribute carried in the Ethernet Auto-Discovery per EVI route is the example shown in FIG. 4, the Ethernet segment route notified by the PE that notifies the Ethernet Auto-Discovery per EVI route is found first. The target preference of this PE on the <ESI, Ethernet Tag> is equal to a result of subtraction or addition of the initial preference in the Ethernet segment route and the value of the Relative Preference field in the Ethernet Auto-Discovery per EVI route according to whether the N flag of Flag is 1 or 0. Whether each Ethernet Auto-Discovery per EVI route with the same <ESI, Ethernet Tag> has been processed is judged subsequently. If so, DF election is performed according to a newly calculated target preference of each multi-homed PE on <ESI, Ethernet Tag>. If not, the above steps are repeated for the next Ethernet Auto-Discovery per EVI route with the same <ESI, Ethernet Tag>. It is worth noting that if the subtraction result is less than 0, the target preference is set to be 0, and if the addition result is greater than 65535, the target preference is set to be 65535. The multi-homed provider edge performs DF election on the target preference of each <ESI, Ethernet Tag> of their own and other provider edges.

Through the technical solution disclosed in the embodiments of the present application, the second provider edge may re-determine the target preference of the first provider edge on one target Ethernet tag of the target Ethernet segment according to the first preference information carried in the first Ethernet auto-discovery route of the first provider edge and the first initial preference carried in the Ethernet segment route. The second provider edge may re-determine the target preference of its own on one target Ethernet tag of the target Ethernet segment according to the second preference information carried in its own Ethernet auto-discovery route and the second initial preference carried in the Ethernet segment route. One target Ethernet tag on the target Ethernet segment corresponds to one piece of first preference information and one piece of second preference information, and different target Ethernet tags of one provider edge on the same target Ethernet segment correspond to different target preferences. Therefore, different designated forwarders may be determined on the different Ethernet tags according to the target preferences of the first provider edge and second provider edge, such that the designated forwarders for each Ethernet tag may be distributed on different multi-homed provider edges more uniformly in a case where there are the plurality of Ethernet tags on one Ethernet segment, which is beneficial for resource utilization and load sharing. In addition, each provider edge automatically notifies its own preference information through the Ethernet auto-discovery route, making the election of the designated forwarder more transparent.

It should be noted that an execution subject of the method for determining the designated forwarder provided by the embodiment of the present application may be an apparatus for determining the designated forwarder. In the embodiments of the present application, the apparatus for determining the designated forwarder provided by the embodiment of the present application is illustrated by taking an example that the apparatus for determining the designated forwarder executes and loads the method for determining the designated forwarder.

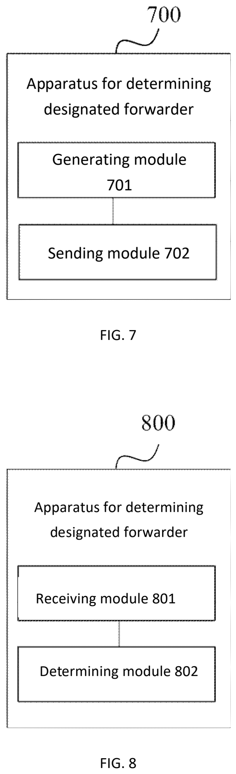

FIG. 7 is a schematic structural diagram of an apparatus for determining a designated forwarder according to an embodiment of the present invention. As shown in FIG. 7, the apparatus 700 for determining the designated forwarder includes: a generating module 701, configured to generate first preference information, and carry the first preference information in an Ethernet auto-discovery route; and a sending module 702, configured to send the Ethernet auto-discovery route to a second provider edge, such that the second provider edge determines the designated forwarder according to the first preference information, wherein the second provider edge and the first provider edge are multi-homed to the same Ethernet segment.

Through the technical solution disclosed in the embodiment of the present application, when the second provider edge elects the designated forwarder according to the first preference information, different provider edges may be elected as the designated forwarder on different Ethernet tags of the same Ethernet segment, which can effectively utilize the resources on the multi-homed provider edges, facilitating load sharing. Further, the election method for the designated forwarder and the preference of the Ethernet tags on the Ethernet segment are publicly notified among the provider edges, making the election more transparent and facilitating problem localization.

In a possible implementation, the generating module 701 is further configured to carry the first preference information in an extended community attribute of the Ethernet auto-discovery route.

In a possible implementation, the generating module 701 is further configured to generate the first preference information according to pre-configured preference configuration information, wherein the preference configuration information includes absolute preference configuration information and relative preference configuration information, and the first preference information includes a preference type field and a preference value field corresponding to the preference type field.

In a possible implementation, in a case where the preference configuration information is the absolute preference configuration information, the preference type field is an absolute preference identifier, and the preference value field is an absolute preference value, wherein the absolute preference value is taken as a first target preference corresponding to the first provider edge.

In a possible implementation, in a case where the preference configuration information is the relative preference configuration information, the preference type field is a relative preference identifier, the preference value field includes a relative preference value and a symbol identifier, and the symbol identifier is used to indicate whether the relative preference value is positive or negative, wherein a sum of a first initial preference and the relative preference value corresponding to a relative preference value field is taken as a first target preference corresponding to the first provider edge, wherein the first initial preference is carried in an Ethernet segment route sent by the first provider edge to the second provider edge.

FIG. 8 is a schematic structural diagram of an apparatus for determining a designated forwarder according to an embodiment of the present invention. As shown in FIG. 8, the apparatus 800 for determining the designated forwarder includes: a receiving module 801, configured to receive a first Ethernet auto-discovery route sent by a first provider edge, wherein the first Ethernet auto-discovery route carries first preference information of the first provider edge; and a determining module 802, configured to determine the designated forwarder according to the first preference information, wherein the second provider edge and the first provider edge are multi-homed to the same Ethernet segment.

Through the technical solution disclosed in the embodiment of the present application, when the second provider edge elects the designated forwarder according to the first preference information, different provider edges may be elected as the designated forwarder on different Ethernet tags of the same Ethernet segment, which can effectively utilize the resources on the multi-homed provider edges, facilitating load sharing. Further, the election method for the designated forwarder and the preference of the Ethernet tags on the Ethernet segment are publicly notified among the provider edges, making the election more transparent and facilitating problem localization.

In a possible implementation, the receiving module 801 is further configured to receive a first Ethernet segment route sent by the first provider edge, wherein the first Ethernet segment route carries a first initial preference of the first provider edge. The determining module 802 is further configured to determine a first target preference of the first provider edge according to the first preference information and the first initial preference, wherein the first preference information includes a preference type field and a preference value field corresponding to the preference type field; determine a second target preference of the second provider edge according to second preference information of the second provider edge carried in a second Ethernet auto-discovery route and a second initial preference of the second provider edge carried in a second Ethernet segment route, wherein the second preference information includes a preference type field and a preference value field corresponding to the preference type field; and determine the designated forwarder according to the first target preference and the second target preference.

In a possible implementation, the determining module 802 is further configured to determine the preference type field of the first preference information; and take, in a case where the preference type field is an absolute preference identifier and the preference value field is an absolute preference value, the absolute preference value as the first target preference corresponding to the first provider edge.

In a possible implementation, the determining module 802 is further configured to determine the preference type field of the first preference information; and take a sum of the first initial preference and a relative preference value corresponding to a relative preference value field as the first target preference corresponding to the first provider edge in a case where the preference type field is a relative preference identifier, the preference value field includes the relative preference value and a symbol identifier, and the symbol identifier is used to indicate whether the relative preference value is positive or negative.

In a possible implementation, the determining module 802 is further configured to obtain the first target preference by calculating a difference between the first initial preference and the relative preference value in a case where a flag bit of the symbol identifier corresponding to the relative preference identifier is a first flag; and obtain the first target preference by adding the first initial preference to the relative preference value in a case where the flag bit of the symbol identifier corresponding to the relative preference identifier is a second flag.

In a possible implementation, the first initial preference is represented by any value within a range of a first value and a second value, the any value is associated with the first initial preference, and the determining module 802 is further configured to determine the first target preference as the first value in a case where the difference between the first initial preference and the relative preference value is lower than the first value.

In a possible implementation, the first initial preference is represented by any value within a range of a first value and a second value, the any value is associated with the first initial preference, and the determining module 802 is further configured to determine the first target preference as the second value in a case where a sum of the first initial preference and the relative preference value is higher than the second value.

In a possible implementation, the determining module 802 is further configured to determine the preference type field of the second preference information; and take, in a case where the preference type field is an absolute preference identifier and the preference value field is an absolute preference value, the absolute preference value as the second target preference corresponding to the second provider edge.

In a possible implementation, the determining module 802 is further configured to determine the preference type field of the second preference information; and take a sum of the second initial preference and a relative preference value corresponding to a relative preference value field as the second target preference corresponding to the second provider edge in a case where the preference type field is a relative preference identifier, the preference value field includes the relative preference value and a symbol identifier, and the symbol identifier is used to indicate whether the relative preference value is positive or negative.

In a possible implementation, the determining module 802 is further configured to obtain the second target preference by calculating a difference between the second initial preference and the relative preference value in a case where a flag bit of the symbol identifier corresponding to the relative preference identifier is a first flag; and obtain the second target preference by adding the second initial preference to the relative preference value in a case where the flag bit of the symbol identifier corresponding to the relative preference identifier is a second flag.

In a possible implementation, the second initial preference is represented by any value within a range of a first value and a second value, the any value is associated with the second initial preference, and the determining module 802 is further configured to determine the second target preference as the first value in a case where the difference between the second initial preference and the relative preference value is lower than the first value.

In a possible implementation, the second initial preference is represented by any value within a range of a first value and a second value, the any value is associated with the second initial preference, and the determining module 802 is further configured to determine the second target preference as the second value in a case where a sum of the second initial preference and the relative preference value is higher than the second value.

In a possible implementation, the determining module 802 is further configured to compare the first target preference with the second target preference, and determine the designated forwarder from the first provider edge and the second provider edge according to a comparison result.

The apparatus for determining the designated forwarder in the embodiment of the present application may be an electronic device, such as an electronic device with an operating system, or a component in the electronic device, such as an integrated circuit or chip. The electronic device may be a network device or devices other than the network device. Exemplarily, the network device may include, but is not limited to, the network device listed above. The other devices may be a server, a network attached storage (NAS), and the like, which is not specifically limited in the embodiment of the present application.

The apparatus for determining the designated forwarder provided by the embodiment of the present application can implement various processes implemented in the method embodiments above and achieve the same technical effects, which are omitted here to avoid repetitions.

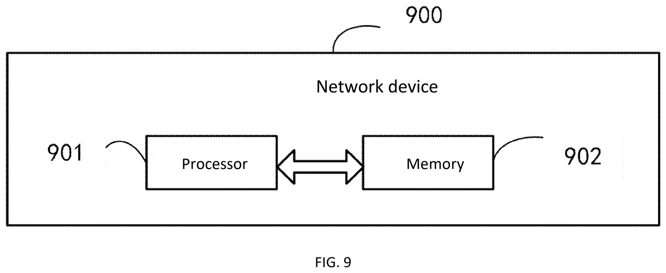

Optionally, as shown in FIG. 9, an embodiment of the present application further provides a network device 900, including a processor 901 and a memory 902. The memory 902 stores a program or instruction able to run on the processor 901. The program or the instruction, when executed by the processor 901, implements various steps of the above method embodiment for determining the designated forwarder, and can achieve the same technical effects.

An embodiment of the present application further provides a readable storage medium. The readable storage medium stores a program or an instruction thereon, and the program or the instruction, when executed by a processor, implements various processes of the above method embodiment for determining the designated forwarder and can achieve the same technical effects, which are omitted here to avoid repetitions.

The processor is a processor in the network device in the above embodiment. The readable storage medium includes a computer-readable storage medium, such as a computer read-only memory (ROM), a random access memory (RAM), a magnetic disk, or an optical disc.

An embodiment of the present application further provides a chip, the chip includes a processor and a communication interface, the communication interface is coupled with the processor, the processor is used to run a program or instruction to implement various processes of the above method embodiment for determining the designated forwarder and can achieve the same technical effects, which are omitted here to avoid repetitions.

It should be understood that the chip mentioned in the embodiment of the present application may further be referred to as a system level chip, a system chip, a chip system, or a system on chip.

An embodiment of the present application further provides a computer program/program product, the computer program/program product is stored in a storage medium, and the computer program/program product is executed by at least one processor to implement various processes of the above method embodiment for determining the designated forwarder and can achieve the same technical effects, which are omitted here to avoid repetitions

It should be noted that terms "including," "containing," or any other variations herein are intended to cover non-exclusive inclusion, such that a process, method, item or apparatus that includes a series of elements not only includes those elements, but also other elements that are not explicitly listed, or further include elements inherent in such the process, method, item or apparatus. Without more limitations, elements defined by a statement "including one" do not exclude the existence of other identical elements in the process, method, item or apparatus that includes the said elements. In addition, it should be pointed out that the scope of the methods and apparatuses in the implementations of the present application is not limited to performing functions in an order shown or discussed, but may further include performing functions in a substantially simultaneous mode or in an opposite order according to the involved functions. For example, the described methods may be executed in a different order from the described ones, and various steps may also be added, omitted, or combined. In addition, features described with reference to certain examples may be combined in other examples.

According to the descriptions in the foregoing implementations, those skilled in the art may clearly learn that the method according to the above embodiment may be implemented by relying on software and a commodity hardware platform or by using hardware. However, in many cases, the former is the better implementation. Based on such an understanding, the technical solutions of the present application essentially, or the part contributing to the prior art, may be presented in the form of a computer software product. The computer software product is stored in a storage medium (such as an ROM/RAM, a magnetic disk, or an optical disc) including several instructions to enable a terminal (which may be a mobile phone, a computer, a server, an air conditioner, a network device, or the like) to execute the methods described in all the embodiments of the present application.

The embodiments of the present application have been described above with reference to the accompanying drawings. However, the present application is not limited to the above specific implementations, and the above specific implementations are merely exemplary and not limitative. Those of ordinary skill in the art may make various variations under the teaching of the present application without departing from the spirit of the present application and the protection scope of the claims, and such variations shall all fall within the protection scope of the present application.

## Claims

1. A method for determining a designated forwarder, performed by a first provider edge, comprising:
Generating (S101) first preference information, and carrying the first preference information in an Ethernet auto-discovery route, wherein the first preference information is used to instruct a second provider edge to determine the designated forwarder; and
sending (S103) the Ethernet auto-discovery route to the second provider edge, wherein the second provider edge and the first provider edge are multi-homed to a same Ethernet segment.

2. The method according to claim 1, wherein carrying the first preference information in the Ethernet auto-discovery route comprises:
carrying the first preference information in an extended community attribute of the Ethernet auto-discovery route.

3. The method according to claim 1, wherein generating the first preference information comprises:
generating the first preference information according to pre-configured preference configuration information, wherein the preference configuration information comprises absolute preference configuration information and relative preference configuration information, and the first preference information comprises a preference type field and a preference value field corresponding to the preference type field.

4. The method according to claim 3, wherein in a case where the preference configuration information is the absolute preference configuration information, the preference type field is an absolute preference identifier, and the preference value field is an absolute preference value, wherein the absolute preference value is taken as a first target preference corresponding to the first provider edge.

5. The method according to claim 3, wherein in a case where the preference configuration information is the relative preference configuration information, the preference type field is a relative preference identifier, the preference value field comprises a relative preference value and a symbol identifier, and the symbol identifier is used to indicate whether the relative preference value is positive or negative, wherein a sum of a first initial preference and the relative preference value corresponding to a relative preference value field is taken as a first target preference corresponding to the first provider edge, wherein the first initial preference is carried in an Ethernet segment route sent by the first provider edge to the second provider edge.

6. A method for determining a designated forwarder, performed by a second provider edge, comprising:
Receiving (S601) a first Ethernet auto-discovery route sent by a first provider edge, wherein the first Ethernet auto-discovery route carries first preference information of the first provider edge; and
determining (S602) the designated forwarder according to the first preference information, wherein the second provider edge and the first provider edge are multi-homed to a same Ethernet segment.

7. The method according to claim 6, wherein the method further comprises:
receiving a first Ethernet segment route sent by the first provider edge, wherein the first Ethernet segment route carries a first initial preference of the first provider edge;
determining a first target preference of the first provider edge according to the first preference information and the first initial preference, wherein the first preference information comprises a preference type field and a preference value field corresponding to the preference type field; and
determining a second target preference of the second provider edge according to second preference information of the second provider edge carried in a second Ethernet auto-discovery route and a second initial preference of the second provider edge carried in a second Ethernet segment route, wherein the second preference information comprises a preference type field and a preference value field corresponding to the preference type field; wherein
determining the designated forwarder according to the first preference information comprises:
determining the designated forwarder according to the first target preference and the second target preference.

8. The method according to claim 7, wherein determining the first target preference of the first provider edge according to the first preference information and the first initial preference comprises:
determining the preference type field of the first preference information; and
taking, in a case where the preference type field is an absolute preference identifier and the preference value field is an absolute preference value, the absolute preference value as the first target preference corresponding to the first provider edge.

9. The method according to claim 7, wherein determining the first target preference of the first provider edge according to the first preference information and the first initial preference comprises:
determining the preference type field of the first preference information; and
taking a sum of the first initial preference and a relative preference value corresponding to a relative preference value field as the first target preference corresponding to the first provider edge in a case where the preference type field is a relative preference identifier, the preference value field comprises the relative preference value and a symbol identifier, and the symbol identifier is used to indicate whether the relative preference value is positive or negative.

10. The method according to claim 9, wherein taking the sum of the first initial preference and the relative preference value corresponding to the relative preference value field as the first target preference corresponding to the first provider edge comprises:
obtaining the first target preference by calculating a difference between the first initial preference and the relative preference value in a case where a flag bit of the symbol identifier corresponding to the relative preference identifier is a first flag; and
obtaining the first target preference by adding the first initial preference to the relative preference value in a case where the flag bit of the symbol identifier corresponding to the relative preference identifier is a second flag.

11. The method according to claim 10, wherein the first initial preference is represented by any value within a range of a first value and a second value, the any value is associated with the first initial preference, and obtaining the first target preference by calculating the difference between the first initial preference and the relative preference value comprises:
determining the first target preference as the first value in a case where the difference between the first initial preference and the relative preference value is lower than the first value.

12. The method according to claim 10, wherein the first initial preference is represented by any value within a range of a first value and a second value, the any value is associated with the first initial preference, and obtaining the first target preference by adding the first initial preference to the relative preference value comprises:
determining the first target preference as the second value in a case where a sum of the first initial preference and the relative preference value is higher than the second value.

13. The method according to claim 7, wherein determining the second target preference of the second provider edge according to the second preference information carried in the second Ethernet auto-discovery route and the second initial preference information carried in the second Ethernet segment route comprises:
determining the preference type field of the second preference information; and
taking, in a case where the preference type field is an absolute preference identifier and the preference value field is an absolute preference value, the absolute preference value as the second target preference corresponding to the second provider edge.

14. The method according to claim 7, wherein determining the second target preference of the second provider edge according to the second preference information carried in the second Ethernet auto-discovery route and the second initial preference information carried in the second Ethernet segment route comprises:
determining the preference type field of the second preference information; and
taking a sum of the second initial preference and a relative preference value corresponding to a relative preference value field as the second target preference corresponding to the second provider edge in a case where the preference type field is a relative preference identifier, the preference value field comprises the relative preference value and a symbol identifier, and the symbol identifier is used to indicate whether the relative preference value is positive or negative.

15. The method according to claim 14, wherein taking the sum of the second initial preference and the relative preference value corresponding to the relative preference value field as the second target preference corresponding to the second provider edge comprises:
obtaining the second target preference by calculating a difference between the second initial preference and the relative preference value in a case where a flag bit of the symbol identifier corresponding to the relative preference identifier is a first flag; and
obtaining the second target preference by adding the second initial preference to the relative preference value in a case where the flag bit of the symbol identifier corresponding to the relative preference identifier is a second flag.

16. The method according to claim 15, wherein the second initial preference is represented by any value within a range of a first value and a second value, the any value is associated with the second initial preference, and obtaining the second target preference by calculating the difference between the second initial preference and the relative preference value comprises:
determining the second target preference as the first value in a case where the difference between the second initial preference and the relative preference value is lower than the first value.

17. The method according to claim 15, wherein the second initial preference is represented by any value within a range of a first value and a second value, the any value is associated with the second initial preference, and obtaining the second target preference by adding the second initial preference to the relative preference value comprises:
determining the second target preference as the second value in a case where a sum of the second initial preference and the relative preference value is higher than the second value.

18. The method according to claim 7, wherein determining the designated forwarder according to the first target preference and the second target preference comprises:
comparing the first target preference with the second target preference, and determining the designated forwarder from the first provider edge and the second provider edge according to a comparison result.

19. A network device, comprising a processor and a memory, wherein the memory stores a program or instruction able to run on the processor, and the program or the instruction, when executed by the processor, implements the steps of the method for determining the designated forwarder according to any one of claims 1 to 5 or 6 to 18.

20. A readable storage medium, having a program or instruction stored thereon, wherein the program or instruction, when executed by a processor, implements the steps of the method for determining the designated forwarder according to any one of claims 1 to 5 or 6 to 18.
